# DEMANDE DE BREVET EUROPEEN

(11) **EP 1 516 667 A1**
(43) Date de publication de la demande: **23.03.2005**
(21) Numéro de dépôt: 04292182.5
(22) Date de dépôt: 10.09.2004
(51) Int. Cl.: B01J 23/30, B01J 23/888, B01J 29/06, B01J 35/00, B01J 37/20, C10G 45/08

(54) **Catalyseur d'hydroraffinage et/ou d'hydroconversion comprenant une phase active sous forme de solution solide sulfure de molybdène et de tungstène**

(30) Priorité: 19.09.2003 FR 0311032
(71) Demandeur: Institut Français du Pétrole, 92852 Rueil Malmaison Cédex (FR)
(72) Inventeur: Thomazeau, Cécile, 92500 Rueil Malmaison (FR); Harle, Virginie, 60260 Lamorlaye (FR); Cseri, Tivadar, 92400 Courbevoie (FR); Lacroix, Michel, 69009 Lyon (FR); Danot, Michel, 44300 Nantes (FR); Geantet, Christophe, 01700 Miribel (FR)

(57) **Abrégé**

La présente invention concerne un catalyseur d'hydroraffinage et/ou hydroconversion de charges hydrocarbonées dont la phase active comprend au moins une solution solide sulfure de molybdène et de tungstène au sein du même feuillet, de formule générale approchée MoₓW₁₋ₓS_{y}, où x est un nombre strictement compris entre 0 et 1 et y est un nombre compris entre 1,4 et 2,6 et de préférence au moins un élément du groupe VIII.

## Description

La présente invention concerne un catalyseur d'hydroraffinage et/ou d'hydroconversion de charges hydrocarbonées, ledit catalyseur comprenant au moins un sulfure mixte de molybdène et de tungstène (groupe VIB) au sein du même feuillet sous forme de solution solide de formule MoₓW₍₁₋ₓ₎S_{y}, éventuellement associé à un support comprenant une matrice poreuse généralement de type oxyde amorphe ou cristallisé, éventuellement associé à au moins un métal du groupe VIII de la classification périodique des éléments et éventuellement associé à au moins un élément dopant choisi parmi le bore, le phosphore, le silicium et les halogènes.

La présente invention concerne également l'utilisation dudit catalyseur pour l'hydroraffinage et/ou l'hydrocraquage/hydroconversion de charges hydrocarbonées telles que les coupes pétrolières, les coupes issues du charbon ou les hydrocarbures produits à partir du gaz naturel et plus particulièrement de charges hydrocarbonées contenant des hétéroatomes.
L'hydroraffinage inclut les réactions d'hydrogénation, hydrodéazotation, hydrodéoxygénation, hydrodéaromatisation, hydrodésulfuration, hydrodémétallisation, hydroisomérisation, hydrodéalkylation, déshydrogénation.

L'hydroraffinage des charges hydrocarbonées telles que les coupes pétrolières soufrées prend une importance de plus en plus grande dans la pratique du raffinage avec la nécessité croissante de réduire la quantité de soufre présente dans les produits pétroliers et de convertir des fractions lourdes en fractions plus légères valorisables en tant que carburants. Cet état de fait tient d'une part à l'intérêt économique de valoriser au mieux des bruts importés de plus en plus riches en fractions lourdes, pauvres en hydrogène et riches en hétéroatomes, dont l'azote et le soufre, et d'autre part aux spécifications imposées dans les divers pays pour les carburants commerciaux. Cette valorisation implique une réduction relativement importante de la masse molaire des constituants lourds, qui peut être obtenue par exemple au moyen de réactions de craquage et d'hydrocraquage de charges préalablement raffinées, c'est-à-dire désulfurées et déazotées.

Les procédés actuels d'hydroraffinage catalytique utilisent des catalyseurs capables de promouvoir les principales réactions utiles à la mise en oeuvre des coupes lourdes, en particulier l'hydrogénation des noyaux aromatiques (HAR), l'hydrodésulfuration (HDS), l'hydrodéazotation (HDN) et autres hydroéliminations. L'hydroraffinage est employé pour traiter des charges telles que les essences, les gazoles, les gazoles sous vide, les résidus atmosphériques ou sous vide, désasphaltés ou non. Par exemple, il est tout indiqué pour le prétraitement des charges des procédés de craquage et d'hydrocraquage catalytique. Au moins une étape d'hydroraffinage est habituellement intégrée dans chacun des schémas connus de valorisation des coupes pétrolières.

Le contexte de la présente invention, résumé ci-dessus, est bien connu de l'homme du métier.

Le problème posé à l'homme du métier est l'obtention de hautes performances catalytiques : activité et sélectivité, avec une réalisation industriellement envisageable.

Nous nous sommés aperçus que, de préférence en association avec un promoteur du groupe VIII, le système ternaire MoₓW₁₋ₓS_{y} conduit à des activités catalytiques nettement supérieures à celles du mélange mécanique des sulfures MoS_{y} et WS_{y} pris dans les mêmes proportions. La caractérisation par EXAFS de ces systèmes a permis de mettre en évidence la présence de molybdène et de tungstène au sein du même feuillet, c'est-à-dire la formation d'une solution solide sulfure, en général de morphologie lamellaire. Il semblerait que les propriétés particulières de cette phase active à l'origine de cette augmentation d'activité catalytique résultent de la formation de cette solution solide.

### Description de l'invention

L'invention concerne donc un catalyseur d'hydroraffinage et/ou d'hydroconversion de charges hydrocarbonées dans lequel la phase active comprend au moins une solution solide sulfure de molybdène et de tungstène. Ledit catalyseur d'hydroraffinage et/ou d'hydroconversion comprend éventuellement au moins un élément du groupe VIII, choisi de manière préférée dans le groupe formé par le fer, le cobalt, le nickel. Le catalyseur contient éventuellement une matrice, généralement amorphe telle que l'alumine ou une silice alumine. Le catalyseur contient éventuellement une zéolithe, telle que par exemple une zéolithe Y de structure faujasite. Le catalyseur contient également éventuellement au moins un élément dopant choisi parmi le bore, le phosphore, le silicium et les halogènes.

Ledit catalyseur d'hydroraffinage et/ou d'hydroconversion présente une activité en hydrogénation des hydrocarbures aromatiques et en hydrodésulfuration plus importante que celle des formules catalytiques connues dans l'art antérieur. Sans vouloir être lié par une quelconque théorie, il semble que cette activité particulièrement élevée des catalyseurs selon l'invention est due aux propriétés particulières de la solution solide sulfure des deux éléments du groupe VIB (molybdène et tungstène) permettant une amélioration des propriétés hydrogénante et hydrodésulfurante. L'effet de synergie de cette solution solide sulfure permet d'obtenir avec le catalyseur selon l'invention des activités catalytiques supérieures à la moyenne pondérée des activités catalytiques qui seraient obtenues par chacun des sulfures simples pris séparément.

La solution solide présente dans le catalyseur de la présente invention est caractérisée par la formule générale approchée suivante : MoₓW₁₋ₓS_{y} où :
x est un nombre strictement compris entre 0 et 1, de préférence compris entre 0,005 et 0,995 et y est un nombre voisin de 2, généralement compris entre 1,4 et 2,6. On obtient généralement des structures proches de la structure lamellaire du disulfure.

Le catalyseur selon l'invention peut être sous forme supportée, c'est-à-dire qu'il comprend un support contenant au moins une matrice ou bien sous forme massique, c'est-à-dire qu'il ne comprend pas de matrice.

Le catalyseur massique selon la présente invention renferme généralement en % poids par rapport à la masse totale du catalyseur :
- 0,01 à 100 %, de préférence 0,1 à 100% et de manière encore plus préférée 1 à 100 % d'au moins une phase sulfure mixte de molybdène et de tungstène formant une solution solide, le catalyseur pouvant renfermer en outre 0 à 99,95%, de préférence 0 à 99,9 %, et de manière encore plus préférée 0 à 99% d'au moins un élément du groupe VIII.

Le catalyseur supporté selon la présente invention renferme généralement en % poids par rapport à la masse totale du catalyseur :
- 1 à 99,9 %, de préférence 5 à 99,5 % et de manière encore plus préférée 10 à 99% d'au moins une matrice,
- 0,1 à 99 %, de préférence 0,5 à 95 % et de manière encore plus préférée 1 à 90% d'au moins une phase sulfure mixte de molybdène et de tungstène formant une solution solide, en particulier le disulfure, le catalyseur pouvant renfermer en outre 0 à 30%, de préférence 0 à 25 % et de manière encore plus préférée 0 à 20 % d'au moins un métal du groupe VIII, 0 à 90%, de préférence 0 à 80%, de manière plus préférée 0 à 70 % et de manière encore plus préférée 0 à 60 % d'au moins un tamis moléculaire zéolithique, par exemple une zéolithe Y de structure faujasite, généralement forme hydrogène.

Le catalyseur massique ou supporté peut éventuellement comprendre 0 à 20 %, de préférence de 0,1 à 15 % et de manière encore plus préférée de 0,1 à 10 % d'au moins un élément dopant choisi dans le groupe formé par le phosphore, le bore, le silicium et les halogènes tels que le chlore et le fluor.

### Mise en évidence de la solution solide

### Principe de l'EXAFS

La solution solide de sulfure de molybdène-tungstène est caractérisée par la technique d'EXAFS (Extended X-Ray Absorption Fine Structure, ou spectroscopie d'absorption X). Cette technique permet d'obtenir des informations structurales sur l'environnement local d'un atome donné et ceci quel que soit l'état physique du matériau (solide cristallin ou amorphe, liquide, gaz). Les photons X utilisés lors de ce type de caractérisation sont des photons X de grande énergie et de haute brillance produits par une source synchrotron. Le rayonnement synchrotron est obtenu à partir d'électrons ou de positrons relativistes soumis à l'accélération centripète d'un champ magnétique. Ces positrons relativistes émettent des radiations (photons X) selon la tangente de leur trajectoire circulaire.

Au niveau macroscopique, lorsque les rayons X traversent la matière, l'intensité I du faisceau transmis après avoir traversé un échantillon homogène, d'épaisseur x et de coefficient d'absorption µ, est plus faible que l'intensité Io du faisceau incident. Le rapport d'intensité I/Io obéit à la loi de Beer-Lambert : I/Io = e^{-µx}.

Au niveau microscopique, le photon d'énergie hv excite un électron des couches internes de l'atome absorbeur (1s au seuil K, 2p au seuil L_{III}) qui est éjecté sous forme d'un photoélectron si l'énergie hv du photon incident est supérieure à l'énergie d'ionisation de l'atome absorbeur. Si l'énergie du photon est inférieure à l'énergie d'ionisation de l'atome absorbeur, ce sont les états excités liés correspondant au XANES (X-ray Absorption Near Edge Structure) qui sont explorés. Le photoélectron éjecté se propage dans le milieu avec une énergie cinétique et une onde associée à un vecteur d'onde k. Dans le cas d'un atome non isolé, il y a interférences entre l'onde sortante et l'onde rétrodiffusée par les atomes voisins. Les interférences avec l'onde sortante modulent périodiquement le coefficient d'absorption. Des oscillations sont obtenues, elles correspondent au signal EXAFS. Le traitement de ces oscillations permet d'extraire une transformée de Fourier, qui correspond à la distribution radiale des atomes autour de l'atome absorbeur.

### Modélisation et identification de la solution solide

L'absorption X permet de déterminer la composition (molybdène et/ou tungstène) des feuillets pour ces matériaux non cristallins. Les caractérisations sont effectuées aux seuils K du molybdène en transmission, et L_{III} du tungstène en transmission ou en fluorescence selon les teneurs en élément absorbeur dans le catalyseur.
A ce jour, l'EXAFS est la seule technique adéquate pour différencier le molybdène et le tungstène dans un même feuillet. En effet, les sulfures de molybdène et de tungstène possèdent des caractéristiques structurales (paramètres de maille) très proches. Ainsi, la substitution du molybdène par le tungstène n'entraîne aucune variation mesurable des distances inter atomiques. C'est donc la variation des caractéristiques électroniques (amplitude de rétrodiffusion et déphasage induit par l'atome rétrodiffuseur) qui permettra de statuer sur l'existence d'une solution solide à partir des spectres d'absorption des rayons X. L'identification de la solution solide sulfure de molybdène-tungstène se fait alors par modélisation des spectres d'absorption obtenus par EXAFS en introduisant ces paramètres électroniques dans un modèle théorique supposant l'existence d'une solution solide. Si le signal EXAFS s'ajuste au modèle théorique, la présence d'une solution solide est mise en évidence.

Le signal EXAFS est formé d'oscillations qui permettent de caractériser l'environnement local d'un atome absorbeur (distances inter-atomiques, nombre et nature des voisins). Dans le cas d'une solution solide sulfure de molybdène-tungstène, puisque les distances interatomiques ne peuvent apporter aucune information, les paramètres à identifier par modélisation du signal EXAFS sont la nature et le nombre des voisins.
Le dépouillement des spectres d'absorption X permet de visualiser la fonction de distribution radiale des atomes autour de l'élément absorbeur par extraction de la transformée de Fourier du signal EXAFS. Cette distribution radiale présente des pics caractéristiques. L'abscisse de ces pics est reliée à la position des atomes autour de l'atome absorbeur. L'intensité de ces pics est reliée au nombre d'atomes situés à la distance donnée par l'abscisse des pics considérés. La description ci-dessous est effectuée pour un système disulfure, mais elle est applicable à tout sulfure selon l'invention.
Pour le disulfure MoS₂, le premier pic de la transformée de Fourier correspond à l'environnement sulfuré de l'atome de molybdène absorbeur (première sphère de coordination), le deuxième pic correspond aux voisins molybdène situés dans le même feuillet que le molybdène absorbeur (deuxième sphère de coordination). Pour le disulfure WS₂, le premier pic de la transformée de Fourier correspond à l'environnement sulfuré de l'atome de tungstène absorbeur, le deuxième pic correspond aux voisins tungstène situés dans le même feuillet que le tungstène absorbeur.

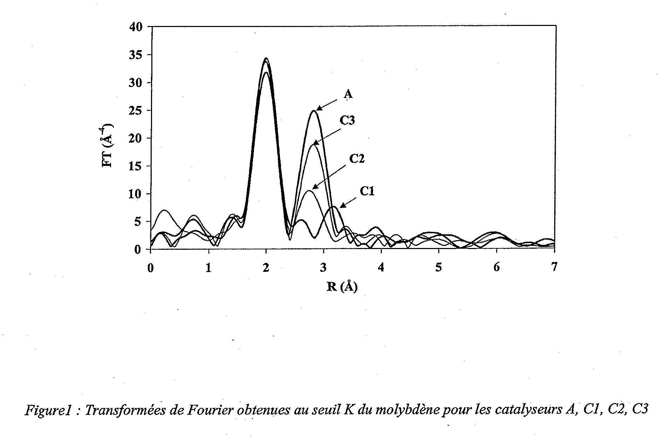

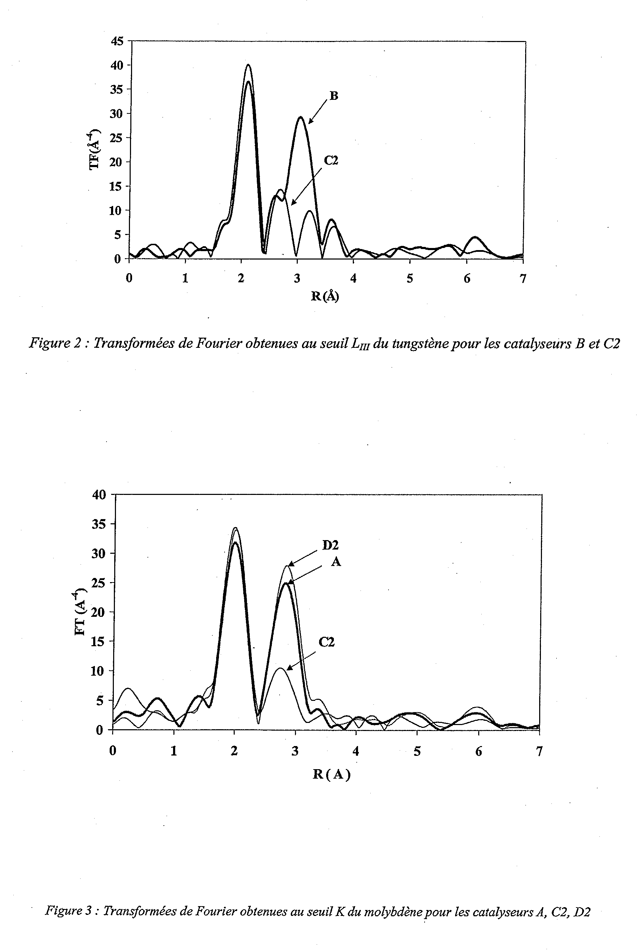

En présence d'une solution solide sulfure de molybdène-tungstène, la distribution radiale est modifiée qualitativement. L'environnement sulfuré autour de l'atome absorbeur (molybdène ou tungstène) restant identique, le premier pic de la transformée de Fourier n'est pas affecté. Les modifications de la distribution radiale apparaissent au niveau du deuxième pic de la transformée de Fourier.
Lorsque la solution solide est caractérisée au seuil K du molybdène, l'intensité de ce deuxième pic diminue considérablement quand le taux de substitution du molybdène par le tungstène augmente, c'est-à-dire quand la teneur en tungstène augmente. Ceci est caractéristique de la présence de molybdène et de tungstène au sein du même feuillet. Pour des teneurs suffisamment importantes en tungstène, un troisième pic apparaît, caractéristique de la contribution du tungstène (figure 1, catalyseurs C3 à C2). Ce pic est masqué par la contribution du molybdène pour les teneurs en tungstène plus faibles (figure 1, catalyseur C₁).
Lorsque la solution solide est caractérisée au seuil L_{III} du tungstène, le deuxième pic initialement observé pour le sulfure WS₂ (figure 2, catalyseur B) se scinde en deux pics distincts, caractéristiques de la présence de molybdène et de tungstène au sein du même feuillet (figure 2, catalyseur C2).

En l'absence d'une solution solide, les transformées de Fourier des sulfures mixtes restent identiques à la transformée de Fourier du sulfure de molybdène lorsque la caractérisation est faite au seuil K du molybdène et identiques à la transformée de Fourier du sulfure de tungstène lorsque la caractérisation est faite au seuil L_{III} du tungstène (figure 3). Cette situation traduit la coexistence de feuillets MoS₂ et de feuillets WS₂ (biphasage).

### Préparation de la solution solide pour la phase active sulfure

De façon générale, le procédé de préparation du sulfure mixte massique compris dans le catalyseur de la présente invention inclut la formation d'un mélange réactionnel qui renferme au moins les composés suivants : au moins une source de molybdène, au moins une source de tungstène, éventuellement de l'eau, éventuellement un solvant non aqueux, éventuellement au moins un élément choisi dans le groupe formé par les éléments du groupe VIII, éventuellement des éléments dopants choisis dans le groupe formé par le bore, le phosphore, le silicium et les halogènes.

Les catalyseurs massiques de la présente invention peuvent être préparés par toutes méthodes adéquates. D'une façon préférée, la source de molybdène est le thiomolybdate d'ammonium, la source de tungstène est le thiotungstate d'ammonium.

De façon plus particulière, le procédé de préparation du catalyseur massique de la présente invention comprend les étapes suivantes :
a) on dissout dans un volume adéquat de solution aqueuse une proportion x de précurseur de molybdène comme le thiomolybdate d'ammonium et une proportion (1-x) de précurseur de tungstène tel que le thiotungstate d'ammonium, éventuellement un précurseur d'un élément du groupe VIII, et éventuellement un précurseur d'élément dopant.
b) on évapore le solvant progressivement, à une température comprise entre 10 et 80°C,
c) on décompose le solide obtenu par un traitement d'activation par sulfuration.

Les catalyseurs supportés de la présente invention peuvent être préparés par toutes méthodes adéquates. D'une façon préférée, le support, par exemple une alumine commerciale, est imprégné par une solution aqueuse contenant au moins à la fois le molybdène et le tungstène (co-imprégnation).

De façon plus particulière, le procédé de préparation du catalyseur supporté de la présente invention comprend les étapes suivantes :
a) on imprègne le support, par exemple une alumine commerciale, par une solution aqueuse contenant à la fois le molybdène et le tungstène et éventuellement un élément du groupe VIII, et éventuellement un élément dopant.
b) on laisse reposer le solide humide sous une atmosphère humide à une température comprise entre 10 et 80°C,
c) on sèche le solide obtenu à l'étape b) à une température comprise entre 60 et 150°C,
d) on calcine le solide obtenu à l'étape c) à une température comprise entre 150 et 800°C,
e) on procède à l'activation du catalyseur par sulfuration.

### Imprégnation du support

L'imprégnation du support est de préférence effectuée par la méthode d'imprégnation dite "à sec" bien connue de l'homme du métier. L'imprégnation est effectuée de manière très préférée en une seule étape par une solution contenant l'ensemble des éléments constitutifs du catalyseur final (co-imprégnation).
D'autres séquences d'imprégnation peuvent être mises en oeuvre pour obtenir le catalyseur de la présente invention.

Ainsi, il est possible de réaliser, dans divers ordres, des imprégnations successives apportant chacune un ou plusieurs des éléments constitutifs du catalyseur, chacune de ces imprégnations étant suivie d'un séchage et d'une calcination.
Une autre méthode bien connue consiste à introduire un ou plusieurs des éléments constitutifs au cours de la synthèse du support. Les autres éléments peuvent être introduits par l'imprégnation du solide ainsi obtenu.

Les sources d'éléments du groupe VIB (Mo, W) qui peuvent être utilisées sont bien connues de l'homme du métier.
Par exemple, parmi les sources de molybdène, on peut utiliser les oxydes et hydroxydes de molybdène, l'acide molybdique, l'acide phosphomolybdique, l'acide silicomolybdique, l'acétylacétonate de molybdène, le xanthate de molybdène, le dimolybdate d'ammonium, l'heptamolybdate d'ammonium, les sels de molybdène comme le fluorure de molybdène, le chlorure de molybdène, le bromure de molybdène, l'iodure de molybdène, l'oxyfluorure de molybdène, l'oxychlorure de molybdène, l'oxybromure de molybdène, l'oxyiodure de molybdène, l'hydrure de molybdène, le nitrure de molybdène, l'oxynitrure de molybdène, le borure de molybdène, le carbure de molybdène, l'oxycarbure de molybdène, le phosphure de molybdène, le sulfure de molybdène, le molybdène hexacarbonyl, les thiomolybdates, les thiophosphates de molybdène, les xanthates et thioxanthates de molybdène, les dithiophosphates, les dithiocarbamates et dithiophosphinates de molybdène, les carboxylates de molybdène. On utilise de préférence l'oxyde de molybdène, le dimolybdate d'ammonium, l'heptamolybdate d'ammonium ou l'acide phosphomolybdique.
Par exemple, parmi les sources de tungstène, on peut utiliser les oxydes et hydroxydes de tungstène, l'acide tungstique, le métatungstate d'ammonium, l'acide phosphotungstique, l'acide silicotungstique, l'acétylacétonate de tungstène, le xanthate de tungstène, le fluorure de tungstène, le chlorure de tungstène, le bromure de tungstène, l'iodure de tungstène, l'oxyfluorure de tungstène, l'oxychlorure de tungstène, l'oxybromure de tungstène, l'oxyiodure de tungstène, les complexes carbonyles, les thiotungstates, les thiophosphates de tungstène, les acétates, les xanthates et thioxanthates de tungstène, les dithiophosphates, les dithiocarbamates et dithiophosphinates de tungstène, les carboxylates de tungstène. On utilise de préférence l'oxyde de tungstène, le tungstate d'ammonium, le métatungstate d'ammonium ou l'acide phosphotungstique.

Les précurseurs dopants sont choisis parmi les précurseurs de bore, de silicium, de phosphore et d'éléments du groupe des halogènes.
La source de phosphore préférée est l'acide orthophosphorique H₃PO₄, mais ses sels et esters comme les phosphates alcalins, phosphates d'ammonium, les phosphates de gallium ou les phosphates d'alkyles conviennent également. Les acides phosphoreux, par exemple l'acide hypophosphoreux, l'acide phosphomolybdique et ses sels, l'acide phosphotungstique et ses sels peuvent être avantageusement employés. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser l'orthosilicate d'éthyle Si(OEt)₄, les siloxanes, les silicates d'halogénures comme le fluorosilicate d'ammonium (NH₄)₂SiF₆ ou le fluorosilicate de sodium Na₂SiF₆. L'acide silicomolybdique et ses sels, l'acide silicotungstique et ses sels peuvent être avantageusement employés. Le silicium peut être ajouté par exemple par imprégnation de silicate d'éthyle en solution dans un mélange eau-alcool. Le silicium peut être ajouté par exemple par imprégnation d'un composé du silicium ayant la formule générale suivante : R₁(R₂R₃Si-O)xR₄ avec R₁, R₂, R₃, R₄ pouvant être individuellement l'un des groupes suivants : -R, -OR, -COOR, -SiR₅R₆R₇, -Cl, -F, -Br, -I avec R₅, R₆, R₇ pouvant être individuellement choisis parmi l'un des groupes suivants : H, ou un radical alkyle, aromatique, cycloalcane, alkylaromatique, alkylcycloalcane, naphténique, naphténoaromatique, de formule CₙH_{2n-y} avec x=1 à 100, n=1 à 20, et y un nombre entier impair compris entre -1 et 29 tel que 2n-y soit supérieur à zéro.

La source de bore peut être l'acide borique, de préférence l'acide orthoborique H₃BO₃, le biborate ou le pentaborate d'ammonium, l'oxyde de bore, les esters boriques de formules B(OR)₃ et HB(OR)₂ dans lesquels R est un reste hydrocarboné ayant habituellement de 1 à 50 atomes de carbone et pouvant comporter des hétéroatomes dans la chaîne ou comme substituant sur la chaîne. A titre d'exemple de restes hydrocarbonés on peut citer les radicaux méthyles, éthyles, propyles, butyles, pentyles, heptyles et octyles. Les groupes R dans les formules ci-avant peuvent être identiques ou différents les uns des autres. Le bore peut être introduit par exemple par une solution d'acide borique dans un mélange eau-alcool.

Les sources d'éléments du groupe des halogènes qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium (NH₄)₂SiF₆, le tétrafluorure de silicium SiF₄ ou de sodium Na₂SiF₆. Le fluor peut être introduit par exemple par imprégnation d'une solution aqueuse d'acide fluorhydrique ou de fluorure d'ammonium.

Le catalyseur de la présente invention peut renfermer un élément du groupe VIII tel que fer, cobalt, nickel, ruthénium, rhodium, palladium, osmium, iridium ou platine. Parmi les métaux du groupe VIII on préfère employer un métal choisi dans le groupe formé par le fer, le cobalt, le nickel et le ruthénium. D'une manière avantageuse on utilise les associations de métaux suivantes : nickel-molybdène-tungstène, cobalt-molybdène-tungstène, fer-molybdène-tungstène. Il est également possible d'utiliser des associations de quatre métaux par exemple nickel-cobalt-molybdène-tungstène. On peut également utiliser dès associations contenant un métal noble tel que ruthénium-molybdène-tungstène, ou encore ruthénium-nickel-molybdène-tungstène.

Les sources d'éléments du groupe VIII qui peuvent être utilisées sont bien connues de l'homme du métier. Par exemple, pour les métaux non nobles on utilisera les nitrates, les sulfates, les phosphates, les halogénures par exemple, chlorures, bromures et fluorures, les carboxylates par exemple acétates et carbonates. Pour les métaux nobles on utilisera les halogénures, par exemple les chlorures, les nitrates, les acides tels que l'acide chloroplatinique, les oxychlorures tels que l'oxychlorure ammoniacal de ruthénium.

Le catalyseur supporté de la présente invention renferme également au moins une matrice minérale poreuse, habituellement amorphe ou mal cristallisée. Cette matrice est habituellement choisie dans le groupe formé par l'alumine, la silice, la silice-alumine, la magnésie, l'argile, l'oxyde de titane, l'oxyde de zirconium, l'oxyde de lanthane, l'oxyde de cérium, les phosphates d'aluminium, les phosphates de bore, ou un mélange d'au moins deux des oxydes cités ci-dessus et les combinaisons alumine-oxyde de bore, les mélanges alumine-oxyde de titane, alumine-zircone et oxyde de titane-zircone. On peut choisir également les aluminates, et par exemple les aluminates de magnésium, de calcium, de baryum, de manganèse, de fer, de cobalt, de nickel, de cuivre et de zinc, les aluminates mixtes et par exemple ceux contenant au moins deux des métaux cités ci-dessus. On peut choisir également les titanates, et par exemple les titanates de zinc, nickel, cobalt. On préfère utiliser des matrices contenant de l'alumine, sous toutes ses formes connues de l'homme du métier, par exemple l'alumine gamma.
On peut aussi avantageusement utiliser des mélanges d'alumine et de silice et des mélanges d'alumine et d'oxyde de bore.

La matrice peut également renfermer, en plus d'au moins un des composés cités ci-dessus, au moins une argile simple synthétique ou naturelle de type phyllosilicate 2:1 dioctaédrique ou phyllosilicate 3:1 trioctaédrique telle que la kaolinite, l'antigorite, la chrysotile, la montmorillonnite, la beidellite, la vermiculite, le talc, l'hectorite, la saponite, la laponite. Ces argiles peuvent être éventuellement délaminées.
On peut aussi avantageusement utiliser des mélanges d'alumine et d'argile et des mélanges de silice-alumine et d'argile.

Le support peut également renfermer, en plus d'au moins un des composés cités ci-dessus, au moins un composé choisi dans le groupe formé par la famille des tamis moléculaires de type aluminosilicate cristallisé ou zéolithes synthétiques ou naturelles telles que la zéolithe Y, la zéolithe Y fluorée, la zéolithe Y contenant des terres rares, la zéolithe X, la zéolithe L, la zéolithe bêta, la mordénite à petits pores, la mordénite à grands pores, les zéolithes oméga, Nu-10, ZSM-22, Nu-86, Nu-87, Nu-88, et la zéolithe ZSM-5.
Parmi les zéolithes on préfère habituellement employer des zéolithes dont le rapport atome de charpente silicium/aluminium (Si/Al) est supérieur à environ 3 :1. On emploie avantageusement des zéolithes de structure faujasite et en particulier les zéolithes Y stabilisées et ultrastabilisées USY soit sous forme au moins partiellement échangées avec des cations métalliques, par exemple des cations des métaux alcalino-terreux et/ou des cations de métaux de terres rares de numéro atomique 57 à 71 inclus, soit sous forme hydrogène (Zéolite Molecular Sieves Structure, Chemistry and Uses, D.W. BRECK, J.WILLEY and sons 1973).
Le catalyseur peut également contenir au moins un composé choisi dans le groupe formé par la famille des tamis moléculaires cristallisés non zéolithiques tels que les silices mésoporeuses, la silicalite, les silicoaluminophosphates, les aluminophosphates, les ferrosilicates, les silicoaluminates de titane, les borosilicates, les chromosilicates et les aluminophosphates de métaux de transition (dont le cobalt).

### Sulfuration

Les catalyseurs de la présente invention sont de préférence soumis à un traitement de sulfuration permettant de transformer, au moins en partie, les espèces métalliques en sulfures avant leur mise en contact avec la charge à traiter.

La source de soufre peut être le soufre lui-même, le sulfure de carbone, l'hydrogène sulfuré, les hydrocarbures soufrés tels que le diméthylsulfure, le diméthyldisulfure, les mercaptans, les composés du thiophène, les thiols, les polysulfures tels que par exemple le ditertiononylpolysulfure ou TPS-37 de la société ATOCHEM, les coupes pétrolières riches en soufre telles que l'essence, le kérosène, le gazole, seuls ou en mélanges avec un des composés soufrés cité ci-dessus. La source de soufre préférée est l'hydrogène sulfuré ou le diméthyl disulfure.
Une méthode de sulfuration classique bien connue de l'homme du métier consiste à chauffer en présence d'hydrogène sulfuré (pur ou par exemple sous flux d'un mélange hydrogène/hydrogène sulfuré) à une température comprise entre 150 et 800°C, de préférence entre 250 et 600°C, généralement dans une zone réactionnelle à lit traversé.

De manière préférée, la sulfuration est réalisée *ex situ*, par exemple selon le procédé de sulfuration TOTSUCAT décrit dans le brevet US 6,100,216 (FR 2 743 512). Ce procédé comprend l'incorporation d'un agent sulfurant choisi par exemple dans le groupe formé par le soufre élémentaire et les polysulfures organiques dans un catalyseur et en plus ou moins grande partie dans les pores du catalyseur. L'incorporation est effectuée en présence d'un solvant qui contient au moins en partie un composé ou une fraction oléfinique, tel que par exemple une huile végétale ou un composant similaire. Le procédé comprend le traitement du catalyseur avec de l'hydrogène entre 150 et 700°C, et ensuite une étape de passivation oxydante. La procédure de sulfuration est réalisée à un endroit différent du site final d'utilisation, c'est-à-dire en dehors du réacteur dans lequel le catalyseur sera utilisé pour sa fonction de conversion ou d'hydroconversion de fractions pétrolières (sulfuration *ex-situ*).
Le traitement de sulfuration préféré consiste à mettre en contact *ex-situ* le catalyseur avec de l'hydrogène et de l'H₂S ou avec de l'hydrogène et un composé sulfuré convertible en H₂S en présence d'hydrogène à une température comprise entre 250 et 600°C. La réaction de sulfuration est ainsi réalisée en phase gaz.
De manière plus préférée, la température de l'étape de sulfuration est comprise entre 350 et 600°C, de manière encore plus préférée entre 350 et 500°C.
La sulfuration peut être réalisée en une ou deux étapes. Dans le mode de réalisation en une étape, de l'hydrogène sulfuré ou un composé sulfuré destiné à se décomposer immédiatement en hydrogène sulfuré est introduit en mélange ou de manière simultanée avec l'hydrogène.
Le mode de réalisation en deux étapes comprend une première étape dans laquelle le composé catalytique est soigneusement mélangé avec du soufre élémentaire ou un composé sulfuré autre que l'hydrogène sulfuré et en absence d'hydrogène, éventuellement en présence d'un solvant additionné éventuellement d'une huile végétale ou oléfinique et dans laquelle il est possible d'opérer en présence de vapeur d'eau et/ou de gaz inerte. Dans la deuxième étape, le composé catalytique dans lequel le soufre est incorporé est mis en contact avec de l'hydrogène en présence éventuelle de vapeur d'eau. A la fin de la réaction en une ou deux étapes, le catalyseur est purgé sous gaz inerte pour évacuer l'hydrogène au moins en partie ainsi que l'hydrogène sulfuré au moins en partie dans ses pores.
La procédure de sulfuration peut être conduite sur un catalyseur en mouvement dans la zone d'incorporation du soufre ou en lit fixe.

Dans un mode de réalisation très préféré, la procédure ex-situ de sulfuration des catalyseurs selon l'invention est conduite en phase gaz à une température comprise entre 350 et 600 °C, sous flux H₂/H₂S, la pression étant avantageusement égale à la pression atmosphérique.

### Utilisations

Les catalyseurs obtenus par la présente invention sont utilisés pour l'hydroraffinage et l'hydrocraquage de charges hydrocarbonées telles que les coupes pétrolières, les coupes issues du charbon ou les hydrocarbures produits à partir du gaz naturel et plus particulièrement pour l'hydrogénation, l'hydrodéazotation, l'hydrodéoxygénation, l'hydrodéaromatisation, l'hydrodésulfuration, l'hydrodémétallisation, l'hydroisomérisation, l'hydrodéalkylation, la déshydrogénation et l'hydrocraquage de charges hydrocarbonées contenant des composés aromatiques et/ou oléfiniques, et/ou naphténiques, et/ou paraffiniques, les dites charges contenant éventuellement des métaux, et/ou de l'azote, et/ou de l'oxygène et /ou du soufre. Dans ces utilisations, les catalyseurs obtenus par la présente invention présentent une activité améliorée par rapport à l'art antérieur.

### Charges

Les charges employées dans le procédé sont généralement choisies dans le groupe formé par les essences, les gazoles, les gazoles sous vide, les résidus désasphaltés ou non, les résidus sous vide, les huiles paraffiniques, les cires et paraffines et les effluents de procédé Fischer Tropsch. Elles contiennent au moins un hétéroatome tels que soufre, oxygène et éventuellement des métaux tels que nickel et vanadium. Les conditions de l'hydroraffinage ou de l'hydrocraquage telles que température, pression, rapport volumique litre d'hydrogène/litre d'hydrocarbure, vitesse volumique horaire, pourront être très variables en fonction de la nature de la charge, de la qualité des produits désirés et des installations dont dispose le raffineur. Les conditions opératoires utilisées dans le ou les réacteurs du procédé selon l'invention sont généralement : une température supérieure à 200°C, souvent comprise entre 200 et 450°C, sous une pression souvent comprise entre 1 et 30 MPa, de préférence inférieure à 20 MPa, la vitesse spatiale étant comprise entre 0,1 et 10h⁻¹ et de préférence 0,1-6h⁻¹, de préférence, 0,1-4h⁻¹, et la quantité d'hydrogène introduite est telle que le rapport volumique litre d'hydrogène/litre d'hydrocarbure soit compris entre 10 et 5000l/l et le plus souvent entre 10 et 2000 l/l.

### Exemples :

Les exemples suivants illustrent l'invention sans en limiter la portée.

### Exemple 1 : Catalyseur NiMo supporté (comparatif)

Le molybdène et le nickel sont co-imprégnés à sec en milieu aqueux sur un support d'alumine y commercial sous forme d'extrudés, développant une surface spécifique de 250 m2/g. Le sel précurseur du molybdène est l'heptamolybdate d'ammonium (NH₄)₆Mo₇O₂₄, 4 H₂O, le sel précurseur du nickel est le nitrate de nickel Ni(NO₃)₂, 6 H₂O. La quantité de nickel est ajustée de façon à respecter le rapport molaire Ni/(Ni+Mo)=0,3. Après une maturation de 6 heures, les extrudés sont séchés à 120°C une nuit, puis calcinés sous air à 500°C pendant 2 heures. Sur ce catalyseur non sulfuré Ni-MoO₃/Al₂O₃, la teneur en molybdène est de 8,3 %, ce qui correspond à 0,104 mole de l'élément molybdène pour 100g de catalyseur, la teneur en nickel est de 2,0 %, ce qui correspond à 0,045 mole de l'élément nickel pour 100g de catalyseur. Ce catalyseur A est représentatif d'un catalyseur industriel.

### Exemple 2 : Catalyseur NiW supporté (comparatif)

Le tungstène et le nickel sont co-imprégnés à sec en milieu aqueux sur un support d'alumine γ commercial, décrit dans l'exemple 1. Le sel précurseur du tungstène est le métatungstate d'ammonium (NH₄)₁₀W₁₂0₃₉, x H₂0, le sel précurseur du nickel est le nitrate de nickel Ni(NO₃)₂, 6 H₂O. La quantité de nickel est ajustée de façon à respecter le rapport molaire Ni/(Ni+W)=0,3. Le catalyseur est séché et calciné dans les conditions décrites exemple 1. Sur ce catalyseur non sulfuré Ni-WO₃/Al₂O₃, la teneur en tungstène est de 15,4 %, ce qui correspond à 0,104 mole de l'élément tungstène pour 100g de catalyseur, la teneur en nickel est de 2,0 %, ce qui correspond à 0,045 mole de l'élément nickel pour 100g de catalyseur. Ce catalyseur B est représentatif d'un catalyseur industriel.

### Exemple 3 : Catalyseurs Ni-MoₓW₍₁₋ₓ₎ supportés (conformes à l'invention)

Une série de catalyseurs contenant à la fois le molybdène, le tungstène et le nickel est préparée. Le molybdène et le tungstène se présentent sous la forme d'une solution solide, au moins à l'état sulfuré, les proportions atomiques en molybdène et en tungstène variant selon x, 0 < x < 1. La quantité de nickel est ajustée de façon à respecter le rapport molaire Ni/(Ni+Mo+W)=0,3. Ces catalyseurs sont préparés par co-imprégnation des sels précurseurs du molybdène, du tungstène et du nickel décrits dans les exemples 1 et 2, en milieu aqueux, sur l'alumine décrite dans l'exemple 1. Le solide humide obtenu est laissé au repos sous une atmosphère humide à une température d'environ 20°C, séché à une température à 120°C, puis calciné à 500°C.
Sur les catalyseurs non sulfurés les teneurs en molybdène, tungstène et nickel sont données dans le tableau I. Le nombre total de moles de métal (molybdène ou tungstène) imprégnées est toujours le même.

**Tableau I :**

| *Composition des différents catalyseurs Ni-Mo*_{*x*}W_{(*1-x)*} *oxyde contenant le molybdène et le tungstène sous forme d'une solution solide après sulfuration* | | | | | | | | |
|---|---|---|---|---|---|---|---|---|
| Référence Catalyseur | x | Mo (% poids) | W (% poids) | n (Mo) (mol.g⁻¹) | n(W) (mol.g⁻¹) | nₜ = n_{Mo} + n_{W} (mol.g⁻¹) | Ni (% poids) | n(Ni) (mol.g⁻¹) |
| C1 | 0,25 | 2,2 | 11,6 | 0,026 | 0,078 | 0,104 | 2,0 | 0,045 |
| C2 | 0,50 | 4,3 | 7,7 | 0,052 | 0,052 | 0,104 | 2,1 | 0,045 |
| C3 | 0,75 | 6,4 | 3,8 | 0,078 | 0,026 | 0,104 | 2,1 | 0,045 |

### Exemple 4 : Catalyseurs Ni-MoₓW₍₁₋ₓ₎ supportés se présentant sous la forme d'un mélange mécanique (non conforme à l'invention)

Une proportion x du catalyseur Ni-MoO₃/Al₂O₃ préparé selon l'exemple 1 ainsi qu'une proportion (1-x) du catalyseur Ni-WO₃/Al₂O₃ préparé selon l'exemple 2 sont mélangées mécaniquement. Une série de catalyseurs de compositions Ni-MoₓW₍₁₋ₓ₎, données dans le tableau II, est ainsi préparée.

**Tableau II :**

| *Composition des différents catalyseurs Ni-Mo*_{*x*}W_{(*1-x)*} *oxyde contenant le molybdène et le tungstène (non conforme à l'invention)* | | | | | | | | |
|---|---|---|---|---|---|---|---|---|
| Référence Catalyseur | x | Mo (% poids) | W (% poids) | n (Mo) (mol.g⁻¹) | n(W) (mol.g⁻¹) | nₜ = n_{Mo} + n_{W} (mol.g⁻¹) | Ni (% poids) | n(Ni) (mol.g⁻¹) |
| D1 | 0,25 | 2,2 | 11,6 | 0,026 | 0,078 | 0,104 | 2,0 | 0,045 |
| D2 | 0,50 | 4,3 | 7,7 | 0,052 | 0,052 | 0,104 | 2,1 | 0,045 |
| D3 | 0,75 | 6,4 | 3,8 | 0,078 | 0,026 | 0,104 | 2,1 | 0,045 |

### Exemple 5 : Sulfuration des catalyseurs oxydes préparés précédemment

Les catalyseurs oxydes A, B, C1 à C3, D1 à D3 sont chargés dans un réacteur à lit fixe et sulfurés sous flux H₂/H₂S (10% molaire d'H₂S), à pression atmosphérique, à 450 °C, pendant 2 heures.

### Exemple 6 : Analyse des catalyseurs supportés par absorption des rayons X

Les catalyseurs sulfurés selon l'exemple 5 sont analysés par EXAFS. L'analyse est réalisée au seuil K du molybdène, entre 19800 et 21000 eV, et au seuil L_{III} du tungstène, entre 10100 et 11000 eV, à l'aide du rayonnement synchrotron, en mesurant l'intensité absorbée par un échantillon. Les transformées de Fourier obtenues au seuil K du molybdène pour les catalyseurs A, C1, C2, C3 sont données figure 1. Les transformées de Fourier obtenues au seuil L_{III} du tungstène pour les catalyseurs B et C2 sont données figure 2. Les transformées de Fourier obtenues au seuil K du molybdène pour les catalyseurs A, C2 et D2 sont données figure 3.

Le nombre d'atomes de molybdène et de tungstène situés autour d'un atome de molybdène absorbeur est donné dans le tableau III. Le nombre d'atomes de molybdène et de tungstène situés autour d'un atome de tungstène absorbeur est donné dans le tableau IV.

**Tableau III :**

| *Environnement d'un atome de molybdène absorbeur* | | |
|---|---|---|
| Catalyseur | N (Mo) | N(W) |
| A | 5,2 | 0 |
| C3 | 4,0 | 1,7 |
| C2 | 2,9 | 1,9 |
| C1 | 2,0 | 4,3 |
| D2 | 5,3 | 0 |

**Tableau IV :**

| *Environnement d'un atome de tungstène absorbeur* | | |
|---|---|---|
| Catalyseur | N (Mo) | N(W) |
| B | 0 | 4,3 |
| C2 | 2,0 | 2,6 |
| D2 | 0 | 4,4 |

L'EXAFS permet de mettre en évidence la présence à la fois du molybdène et du tungstène, au sein du même feuillet, autour d'un atome absorbeur donné, pour la série de catalyseurs C1, C2, C3 conformes à l'invention. Lorsque la solution solide est formée, un atome de molybdène est entouré à la fois d'atomes de molybdène et d'atomes de tungstène (tableau III) et un atome de tungstène sera entouré à la fois d'atomes de tungstène et d'atomes de molybdène (tableau IV). On observe en effet (figure 1) que l'intensité du second pic, situé vers 2.8 Å, diminue et qu'un troisième pic apparaît, vers 3.2 Å, pour le catalyseur C1. Quantitativement, le tableau III montre que le nombre de voisins molybdène diminue et le nombre de voisins tungstène augmente quand la proportion x en molybdène diminue dans la solution solide. Le tableau IV montre que des voisins W apparaissent (catalyseur C2). A l'opposé, dans le cas d'un mélange mécanique de Ni-MoS₂/Al₂O₃ et de Ni-WS₂/Al₂O₃, un atome de molybdène est entouré uniquement d'atomes de molybdène (5,2 atomes, tableau III, catalyseur D2) et un atome de tungstène est entouré uniquement d'atomes de tungstène (4,3 atomes, tableau IV, catalyseur D2).
Les différences entre les catalyseurs conformes à l'invention (C2 par exemple) et les catalyseurs non conformes à l'invention (D2 par exemple) sont illustrées nettement par la figure 3 et les tableaux III et IV.

### Exemple 7 : Test en hydrogénation de la tétraline (molécule modèle aromatique)

L'activité des catalyseurs supportés sur alumine A, B, C1 à C3, D1 à D3 précédemment préparés et sulfurés a été comparée en hydrogénation de molécule aromatique (hydrogénation de la tétraline), dans un réacteur à lit fixe traversé, sous pression d'hydrogène, dans les conditions opératoires suivantes :
Pression totale : 45 bars
Pression de tétraline : 6000 Pa
Pression de H₂S : 1504 Pa
Température : 300°C
Débit hydrogène : 300 ml.min⁻¹
Masse de catalyseur chargé : 87 mg

Les performances catalytiques sont données dans le tableau V. Elles sont exprimées en gain d'activité par rapport à l'activité (en mole de tétraline converties par g de catalyseur et par seconde) de la moyenne pondérée des activités des catalyseurs de référence A et B, ou en activité relative par rapport à l'activité du catalyseur A.

**Tableau V :**

| *Activité des catalyseurs supportés en hydrogénation de la tétraline* | | |
|---|---|---|
| Catalyseur | Gain d'activité | Activité relative à A |
| B | / | 1,22 |
| C1 | 13% | 1,32 |
| C2 | 33 % | 1,45 |
| C3 | 65% | 1,75 |
| D1 | 0% | 1,16 |
| D2 | 0% | 1,11 |
| D3 | 0% | 1,05 |
| A | / | 1 |

Les catalyseurs contenant à la fois du molybdène et du tungstène formant la solution solide (C1 à C3) présentent une activité supérieure à la moyenne pondérée des activités des catalyseurs de référence A et B. De plus, ces catalyseurs sont plus actifs que le catalyseur A ne contenant que du molybdène ou que le catalyseur B ne contenant que du tungstène. Les activités des catalyseurs D1 à D3 correspondent parfaitement aux moyennes pondérées des activités des catalyseurs A et B.

### Exemple 8 : Test en HDS d'un gazole

L'activité catalytique du catalyseur C2 conforme à l'invention a été étudiée en HDS d'un gazole à 146 ppm de soufre, dans un réacteur à lit fixe traversé. Les conditions expérimentales sont données tableau VI.

**Tableau VI :**

| *Conditions de test gazole* | |
|---|---|
| Teneur en soufre du gazole | 146 ppm |
| Température de réaction | 340°C |
| Pression H₂ | 3 MPa |
| VVH | 4 h⁻¹ |
| Pression H₂S | 0-0,09 MPa |

Les performances catalytiques sont données dans le tableau VII. Elles sont exprimées en gain d'activité par rapport à la moyenne pondérée des activités des catalyseurs de référence A et B, ou en activité relative par rapport à l'activité du catalyseur A.

**Tableau VII :**

| *Activité des catalyseurs supportés en HDS d'un gazole* | | |
|---|---|---|
| Catalyseur | Gain d'activité | Activité relative à A |
| A | / | 1 |
| C2 | 35 % | 1,25 |
| B | / | 0,8 |

Avec le catalyseur C2, le gain d'activité est de 35 % par rapport à l'activité catalytique d'un mélange mécanique, de même composition globale, des catalyseurs A et B. Cet exemple permet de montrer que le gain d'activité observé sur molécule modèle est conservé sur charge réelle.

### Exemple 9 : Sulfuration conforme

Les catalyseurs oxydes A, B, C1 à C3, D1 à D3 sont chargés dans un réacteur à lit fixe et sulfurés *ex-situ* sous flux H₂/H₂S (15 % molaire d'H₂S), à pression atmosphérique, à 450 °C, pendant 2 heures. Ils sont ensuite transférés dans le réacteur à lit fixe du test d'hydrogénation du toluène.

### Exemple 10 : Sulfuration non conforme

Les catalyseurs oxydes A, B, C1 à C3 sont chargés dans le réacteur à lit fixe du test d'hydrogénation du toluène et sulfurés *in-situ* sous mélange hydrocarbure et agent sulfurant, à 330°C, pendant 2 heures.

### Exemple 11 : Hydrogénation du toluène - Activité catalytique des catalyseurs A, B, C1 à C2 après sulfuration conforme ou non conforme

L'activité catalytique des catalyseurs A, B, C1 à C2 après sulfuration conforme ou non conforme a été étudiée en hydrogénation du toluène dans un réacteur à lit fixe traversé. Les conditions expérimentales sont données tableau VIII.

**Tableau VIII :**

| *Conditions de test toluène* | |
|---|---|
| Température de réaction | 330°C |
| Ptotale | 60 bars |
| VVH | 2 |

La charge est composée en % poids de 20% toluène, 74.6 % de cyclohexane, 5.4 % de DMDS.

Les performances catalytiques sont données dans le tableau IX. Elles sont exprimées en gain d'activité par rapport à l'activité de la moyenne pondérée des activités des catalyseurs de référence A et B.

**Tableau IX :**

| *Gain d'activité des catalyseurs supportés en hydrogénation du toluène après sulfuration conforme ou non conforme* | | |
|---|---|---|
| | Sulfuration conforme | Sulfuration non conforme |
| Catalyseur | Gain d'activité | Gain d'activité |
| A | / | / |
| C3 | 15 % | 5 % |
| C2 | 35 % | 0 |
| C1 | 50 % | -10% |
| B | / | / |

Les catalyseurs C1 à C3 contenant à la fois du molybdène et du tungstène au sein d'une même solution solide et ayant subi une sulfuration conforme qui permet la formation de la solution solide, possèdent un gain d'activité par rapport à la moyenne pondérée des activités des catalyseurs A et B de 15 à 50 % selon les compositions en Mo et W.

Les catalyseurs C1 à C3 contenant à la fois du molybdène et du tungstène et ayant subi une sulfuration non conforme qui ne permet pas la formation de la solution solide, ne présentent pas de gain d'activité significatif par rapport à la moyenne pondérée des activités des catalyseurs A et B.

## Revendications

1. Catalyseur d'hydroraffinage et/ou d'hydroconversion de charges hydrocarbonées **caractérisé en ce que** la phase active dudit catalyseur comprend au moins une solution solide sulfure de molybdène et de tungstène au sein du même feuillet, de formule générale approchée MoₓW₁₋ₓS_{y}, où x est un nombre strictement compris entre 0 et 1 et y est un nombre compris entre 1,4 et 2,6 et **en ce que** le catalyseur est soumis à un traitement de sulfuration consistant à mettre en contact ex situ le catalyseur avec un flux H2/H2S à pression atmosphérique, à une température comprise entre 350 et 600°C.

2. Catalyseur selon la revendication 1 qui comprend au moins un élément du groupe VIII.

3. Catalyseur selon la revendication 2 tel que ledit élément du groupe VIII est choisi dans le groupe formé par le fer, le cobalt et le nickel.

4. Catalyseur selon l'une des revendications 1 à 3 contenant au moins un élément dopant choisi dans le groupe formé par le bore, le phosphore, le silicium et les halogènes.

5. Catalyseur selon l'une des revendications précédentes qui comprend une matrice.

6. Catalyseur selon la revendication 5 dans lequel la matrice est choisie dans le groupe formé par l'alumine, la silice, la silice-alumine, la magnésie, l'argile, l'oxyde de titane, l'oxyde de zirconium, l'oxyde de lanthane, l'oxyde de cérium, les phosphates d'aluminium, les phosphates de bore, les combinaisons alumine-oxyde de bore, alumine-oxyde de titane, alumine-zircone et oxyde de titane-zircone, les aluminates, de magnésium, de calcium, de baryum, de manganèse, de fer, de cobalt, de nickel, de cuivre et de zinc et les titanates (de zinc, de nickel et de cobalt) seuls ou en mélange.

7. Catalyseur selon la revendication 5 qui contient au moins une argile simple, synthétique ou naturelle, délaminée ou non, de type phyllosilicate 2:1 dioctaédrique ou phyllosilicate 3:1 trioctaédrique choisie parmi la kaolinite, l'antigorite, la chrysotile, la montmorillonnite, la beidellite, la vermiculite, le talc, l'hectorite, la saponite, la laponite.

8. Catalyseur selon la revendication 1 à 7 qui contient au moins un composé choisi dans le groupe formé par la famille des tamis moléculaires non zéolithiques tels que les silices mésoporeuses, la silicalite, les silicoaluminophosphates, les aluminophosphates, les ferrosilicates, les silicoaluminates de titane, les borosilicates, les chromosilicates et les aluminophosphates de métaux de transition (dont le cobalt).

9. Catalyseur massique selon l'une des revendications 1 à 4 renfermant en % poids, par rapport à la masse totale du catalyseur
0,01 à 100 % d'au moins une phase solution solide sulfure de molybdène et de tungstène,
le catalyseur pouvant renfermer en outre
0 à 99,95 % d'au moins un métal du groupe VIII,
0 à 20% d'au moins un élément dopant.

10. Catalyseur supporté selon l'une des revendications 1 à 8 renfermant en % poids, par rapport à la masse totale du catalyseur
0,1 à 99 % d'au moins une phase solution solide sulfure de molybdène et de tungstène,
1 à 99,9% d'au moins une matrice,
le catalyseur pouvant renfermer en outre
0 à 30 % d'au moins un métal du groupe VIII,
0 à 90 % d'au moins un tamis moléculaire zéolithique,
0 à 20% d'au moins un élément dopant.

11. Catalyseur selon la revendication 10 où le tamis moléculaire zéolithique est choisi dans le groupe formé par la zéolithe Y, la zéolithe Y fluorée, la zéolithe Y contenant des terres rares, la zéolithe X, la zéolithe L, la zéolithe bêta, la mordénite à petits pores, la mordénite à grands pores, les zéolithes oméga, Nu-10, ZSM-22, Nu-86, Nu-87, Nu-88, et la zéolithe ZSM-5.

12. Catalyseur selon la revendication 11 dans lequel le tamis moléculaire zéolithique est une zéolithe Y de structure faujasite.

13. Procédé d'hydroraffinage et/ou hydroconversion de charges hydrocarbonées utilisant le catalyseur selon l'une des revendications précédentes, à une température supérieure à 200°C, une pression comprise entre 1 MPa et 30 MPa, en présence d'hydrogène avec un rapport volumique hydrogène/hydrocarbures H₂/HC compris entre 10 et 5000 litres d'hydrogène par litre de charge et à une vitesse volumique horaire comprise entre 0,1 et 10 h⁻¹.

14. Procédé selon la revendication 13 tel que la charge employée dans le procédé est choisie dans le groupe formé par les essences, les gazoles, les gazoles sous vide, les résidus désasphaltés ou non, les résidus sous vide, les huiles paraffiniques, les cires et les paraffines, les effluents de procédé Fischer-Tropsch.
